# EUROPEAN PATENT APPLICATION

(11) **EP 4 770 270 A1**
(43) Date of publication of application: **01.07.2026**
(21) Application number: 24915521.9
(22) Date of filing: 19.11.2024
(51) Int. Cl.: H05B 6/06, H05B 6/12, H02M 7/04

(54) **COOKING APPLIANCE AND METHOD OF CONTROLLING SAME**

(30) Priority: 05.01.2024 KR 20240002522; 27.06.2024 KR 20240084867
(71) Applicant: Samsung Electronics Co., Ltd., Suwon-si, Gyeonggi-do 16677 (KR)
(72) Inventor: KIM, Daehyun, Suwon-si, Gyeonggi-do 16677 (KR); KIM, Kyounghwan, Suwon-si, Gyeonggi-do 16677 (KR); JUNG, Kyunghoon, Suwon-si, Gyeonggi-do 16677 (KR); WOO, Younghoon, Suwon-si, Gyeonggi-do 16677 (KR)
(74) Representative: Walaski, Jan Filip
(86) International application number: PCT/KR2024/018247
(87) International publication number: WO 2025/146938

(57) **Abstract**

A cooking appliance may include: a cooking plate (CP); a vessel detection (VD) circuit including: a VD coil, and at least one switch that is controllable to allow current into, and from, the VD coil, wherein the VD circuit is configured to, while the at least one switch is controlled to allow current into, and from, the VD coil, detect a position or type of cooking vessel on the CP; a heating coil below the CP configured to generate a magnetic field extending through the CP and VD circuit based on a power having a frequency being applied to the heating coil; and a controller configured to control the at least one switch so that, for a time at each period of a plurality of periods corresponding to the frequency, while the power is applied to the heating coil, current into, and from, the VD coil are allowed.

## Description

### [Technical Field]

The present disclosure relates to a cooking appliance including a vessel detection circuit for detecting a cooking vessel and a method of controlling the cooking appliance.

### [Background Art]

A cooking appliance is an apparatus for heating and a cooking object, such as food, and refers to an apparatus capable of providing various functions related to cooking, such as heating, thawing, drying, and sterilizing of a cooking object. Examples of the cooking appliance may include a cooktop that heats a cooking vessel containing food using electricity or gas.

The cooking appliance may include an apparatus that uses eddy currents generated by applying driving power to a heating coil to heat a cooking vessel.

Recently, there has been development of technology including a vessel detection circuit, which detects when a vessel is arranged on a cooking plate, and based on signals output from the vessel detection circuit, identifying the position of the cooking vessel on the cooking plate or the type of the cooking vessel.

However, when applying a drive current to a heating coil to heat a cooking vessel, the resulting magnetic field or induced electromotive force may affect the vessel detection circuit, preventing accurate detection of a cooking vessel on a cooking plate.

### [Disclosure]

### [Technical Problem]

The present disclosure may provide a cooking appliance and a method of controlling the same that are capable of detecting a cooking vessel on a cooking plate without being affected by an induced electromotive force generated from a heating coil.

The technical objectives of the present invention are not limited to the above, and other objectives that are not described above may become apparent to those of ordinary skill in the art based on the following descriptions.

### [Technical Solution]

In accordance with the present disclosure, a cooking apparatus may include: a cooking plate; a vessel detection circuit including: a vessel detection coil, and at least one switch controllable to allow a flow of an input current into the vessel detection coil and a flow of an output current from the vessel detection coil, wherein the vessel detection circuit is configured to, while the at least one switch is controlled to allow the flow of the input current into the vessel detection coil and the flow of the output current from the vessel detection coil, detect a position or a type of a cooking vessel on the cooking plate; a heating coil below the cooking plate and configured to generate a magnetic field that extends through the cooking plate and the vessel detection circuit based on a driving power having a driving frequency being applied to the heating coil; and a controller configured to control the at least one switch so that, for a specified time at each predetermined period of a plurality of predetermined periods corresponding to the driving frequency, while the driving power is being applied to the heating coil, the flow of the input current into the vessel detection coil and the flow of the output current from the vessel detection coil are allowed.

The vessel detection circuit may further include an analog/digital (A/D) converter that may be configured to convert a value of the output current from the vessel detection coil into a digital signal.

The vessel detection coil may include a plurality of vessel detection coils, and the vessel detection circuit may further include a multiplexer that may be controllable to allow a flow of each input current of a plurality of input currents respectively corresponding to the plurality of vessel detection coils to be sequentially input into each vessel detection coil of the plurality of vessel detection coils.

The plurality of vessel detection coils may include a first vessel detection coil and a second vessel detection coil, and the multiplexer may be controllable to allow a flow of a first input current corresponding to the first vessel detection coil to be input into the first vessel detection coil and then to allow a flow of a second input current corresponding to the second vessel detection coil to be input into the second vessel detection coil.

The vessel detection coil may include a plurality of vessel detection coils, and the vessel detection circuit may further include a multiplexer that may be controllable to allow a flow of each output current of a plurality of output currents respectively corresponding to the plurality of vessel detection coils to be sequentially output to the A/D converter.

The plurality of vessel detection coils may include a first vessel detection coil and a second vessel detection coil, and the multiplexer may be controllable to allow a flow of a first output current corresponding to the first vessel detection coil to be output to the A/D converter, and then to allow a flow of a second output current corresponding to the second vessel detection coil to be output to the A/D converter.

The vessel detection circuit may further include a Zener diode circuit that may be configured to connect a first node through which the flow of the input current flows and a second node through which the flow of the output current flows, and the Zener diode circuit may include a first Zener diode having a first cathode connected to the first node and a first anode connected to a ground node, and a second Zener diode having a second cathode connected to the second node and a second anode connected to the ground node.

The controller may be configured to determine each predetermined period of the plurality of predetermined periods based on the driving frequency.

The controller may be configured to control the at least one switch based on receiving a heating execution command for heating the cooking vessel on the cooking plate.

The cooking apparatus may further include: a coil assembly below the cooking plate and including a first layer, an insulating layer below the first layer, and a second layer below the insulating layer, wherein the vessel detection coil may be in the first layer, and the heating coil may be in the second layer.In accordance with the present disclosure, a method of controlling a cooking apparatus including a cooking plate, a vessel detection circuit including a vessel detection coil, and at least one switch that is controllable to allow a flow of an input current into the vessel detection coil and a flow of an output current from the vessel detection coil, wherein the vessel detection circuit is configured to, while the at least one switch is controlled to allow the flow of the input current into the vessel detection coil and the flow of the output current from the vessel detection coil, detect a position or a type of a cooking vessel on the cooking plate, and the cooking apparatus further includes a heating coil below the cooking plate and configured to generate a magnetic field that extends through the cooking plate and the vessel detection circuit based on a driving power having a driving frequency being applied to the heating coil, the method may include: applying the driving power to the heating coil; and controlling the at least one switch so that, for a specified time at each predetermined period of a plurality of predetermined periods corresponding to the driving frequency, while the driving power is being applied to the heating coil, the flow of the input current into the vessel detection coil and the flow of the output current from the vessel detection coil are allowed.

The vessel detection circuit may further include an analog/digital (A/D) converter, and the method may further include: converting, with the A/D converter, a value of the output current from the vessel detection coil into a digital signal.

The vessel detection coil may include a plurality of vessel detection coils, the vessel detection circuit may further include a multiplexer, and the method may further include: controlling the multiplexer to allow a flow of each input current of a plurality of input currents respectively corresponding to the plurality of vessel detection coils to be sequentially input into each vessel detection coil of the plurality of vessel detection coils.

The plurality of vessel detection coils may include a first vessel detection coil and a second vessel detection coil, and the method may further include: controlling the multiplexer to allow a flow of a first input current corresponding to the first vessel detection coil to be input into the first vessel detection coil and then to allow a flow of a second input current corresponding to the second vessel detection coil to be input into the second vessel detection coil.

The vessel detection coil may include a plurality of vessel detection coils, the vessel detection circuit may further include a multiplexer, and the method may further include: controlling the multiplexer to allow a flow of each output current of a plurality of output currents respectively corresponding to the plurality of vessel detection coils to be sequentially output to the A/D converter.

### [Advantageous Effects]

According to the present disclosure, it is possible to detect a cooking vessel on a cooking plate without being affected by an induced electromotive force generated from a heating coil.

According to the present disclosure, it is possible to maximize the number of vessel detection coils and heating coils installed in a cooking appliance.

### [Description of Drawings]

FIG. 1 is a drawing illustrating a cooking appliance according to one embodiment when viewed from the top.
FIG. 2 is a drawing illustrating a state in which a cooking plate of a cooking appliance according to one embodiment is separated.
FIG. 3 is a drawing illustrating a state in which a coil assembly of a cooking appliance according to one embodiment is separated.
FIG. 4 is a drawing illustrating a state in which a coil assembly mounting plate that mounts a coil assembly of a cooking appliance according to one embodiment is separated.
FIG. 5 is a drawing for describing the principle by which an induced magnetic field generated when driving a heating coil affects a vessel detection coil.
FIG. 6 is a control block diagram illustrating a cooking appliance according to one embodiment.
FIG. 7 is a drawing for describing a method of applying driving power to a heating coil and a vessel detection coil according to one embodiment.
FIG. 8 is a drawing for describing a method of applying an input current to a vessel detection coil and obtaining an output current output from the vessel detection coil according to one embodiment.
FIG. 9 is a diagram for describing a method of sequentially applying input currents to vessel detection coils using a multiplexer, or sequentially obtaining output currents from the vessel detection coils using a multiplexer according to one embodiment.
FIG. 10 is a circuit diagram of a vessel detection circuit according to one embodiment.
FIG. 11 is a diagram for describing a method of determining a period for turning on a switch of a vessel detection circuit based on a driving frequency applied to a heating coil according to one embodiment.
FIG. 12 illustrates a circuit diagram of a vessel detection circuit with a Zener diode further added to the vessel detection circuit shown in FIG. 10.
FIG. 13 is a flowchart for describing a method of controlling a cooking appliance according to one embodiment.
FIG. 14 is a diagram for describing a coil assembly according to one embodiment.

### [Modes of the Disclosure]

Various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

The term of "and/or" includes a plurality of combinations of relevant items or any one item among a plurality of relevant items.

The terms as used throughout the specification, such as "~ part", "~ module", "~ member", "~ block", and the like, may be implemented in software and/or hardware. A plurality of "~ parts", "~ modules", "~ members", or "~ blocks" may be implemented in a single element, or a single "~ part", "~ module", "~ member", or "~ block" or may include a plurality of elements.

Herein, the expressions "a first", "a second", "the first", "the second", etc., may simply be used to distinguish an element from other elements, but is not limited to another aspect (e.g., importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

Meanwhile, the terms "front", "rear", "left", "right", "upper" and "lower" used in the following description are defined based on the drawings, and the shape and location of each component are not limited by these terms. For example, the front side may be defined as a +X side and the rear side may be defined as a -X side. For example, based on the drawing, the right side may be defined as a +Y side and the left side may be defined as a -Y side. For example, based on the drawing, the top side may be defined as a +Z side and the bottom side may be defined as a -Z side.

Hereinafter, an embodiment according to the present invention will be described in detail with reference to the accompanying drawings.

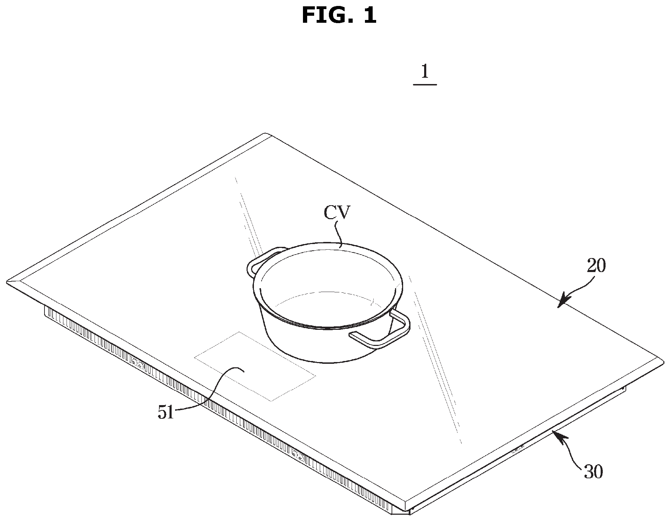

FIG. 1 is a drawing illustrating a cooking appliance according to one embodiment when viewed from the top.

Referring to FIG. 1, the cooking appliance may be provided to cook food. The cooking appliance may be provided to heat food.

The cooking appliance 1 may include a cooking plate 20 on which a cooking vessel CV may be arranged. For example, the cooking plate 20 may include a substantially flat shape. For example, the cooking plate 20 may include tempered glass, such as ceramic glass.

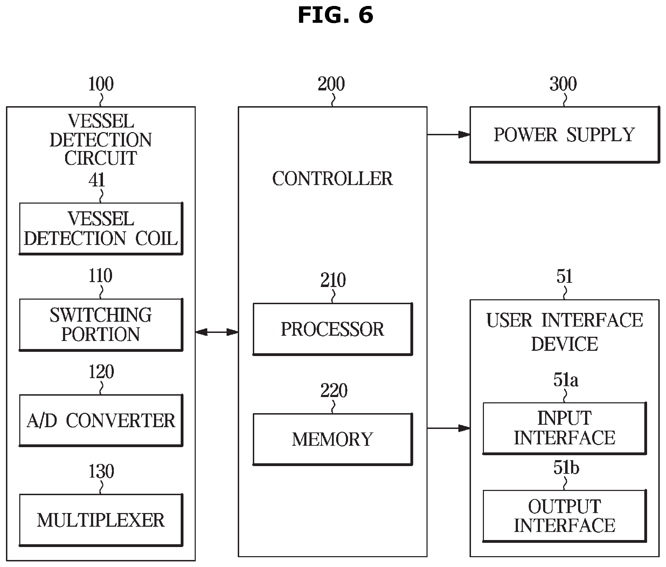

The cooking appliance 1 may include a user interface device 51 provided on the cooking plate 20. The user interface device 51 may include an input interface (51a, see FIG. 6) provided to receive a command from a user and an output interface (51b, see FIG. 6) provided to display various types of information of the cooking appliance 1. The user interface device 51 may be provided as an area that exposes at least a portion of a display assembly 50, which is to be described below, to receive commands from the user or allow commands to display to the user.

The cooking appliance 1 may include a bottom plate 30 arranged below the cooking plate 20. The bottom plate 30 may be arranged at a lower side of the cooking plate 20. The bottom plate 30 may be provided to have a square shape. The interior of the bottom plate 30 may have a space in which various configurations of the cooking appliance 1 may be arranged.

In the drawings, the cooking appliance 1 is illustrated as an induction electric cooktop, but the present disclosure is not limited thereto. The type of the cooking appliance 1 is not limited as long as the cooking appliance 1 can heat the cooking vessel CV. For example, the cooking appliance 1 may be provided as a gas range, a highlight, a hybrid, or an oven. However, the following description is made in relation that the cooking appliance 1 is an induction type electric cooktop.

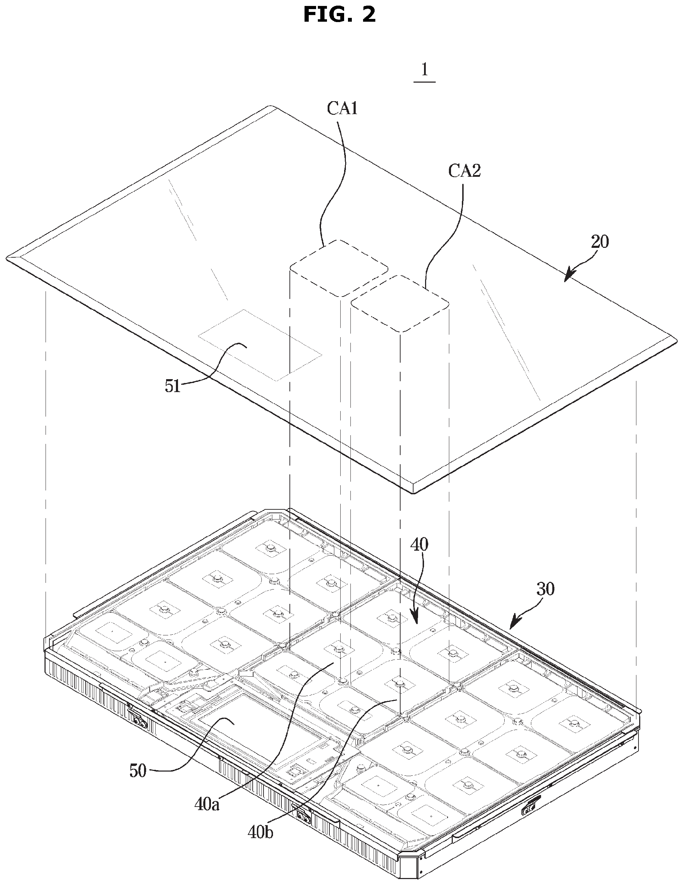

FIG. 2 is a drawing illustrating a cooking plate of a cooking appliance according to one embodiment of the present invention in a separated state.

Referring to FIG. 2, the cooking plate 20 may include cooking areas CA1 and CA2. The cooking areas CA1 and CA2 may be provided in plural. The plurality of cooking areas CA1 and CA2 may include a first cooking area CA1 and a second cooking area CA2.

The first cooking area CA1 may include a cooking area corresponding to a first coil assembly 40a.

The second cooking area CA2 may include a cooking area corresponding to a second coil assembly 40b.

In the drawing, the cooking area is illustrated as including two cooking areas, but according to various embodiments, the cooking area may include three or more cooking areas. In addition, the first cooking area CA1 and the second cooking area CA2 may be referred to as a cooking area. In addition, the entire cooking plate 20 may be referred to as a cooking area. However, for convenience of description, the cooking plate 20 is described as including a first cooking area CA1 and a second cooking area CA2.

The cooking appliance 1 may include a coil assembly 40 and a display assembly 50.

The coil assembly 40 and the display assembly 50 may be arranged in a space inside the bottom plate 30.

The coil assembly 40 may include a first coil assembly 40a and/or a second coil assembly 40b. For example, the coil assembly 40 may include the first coil assembly 40a arranged below the first cooking area CA1 and the second coil assembly 40b arranged below the second cooking area CA2.

Each of the first coil assembly 40a and the second coil assembly 40b may be provided to have a quadrangular shape. For example, the first coil assembly 40a and the second coil assembly 40b may be provided to have a quadrangular shape.

However, the shapes of the first coil assembly and the second coil assembly are not limited thereto and may be provided in various shapes. For example, each of the first coil assembly and the second coil assembly may be provided to have a circular shape.

The display assembly 50 may be provided to implement an output interface 51b. The display assembly 50 may be arranged to correspond to the output interface 51b. For example, the display assembly 50 may be provided as a printed board assembly (PBA) including a display panel, a switching element, an integrated circuit element, etc., and a printed circuit board (PCB) on which the display panel, the switching element, the integrated circuit element, etc. are installed. When the display assembly 50 is a display panel, various types of information output through the display panel may be displayed through the output interface 51b.

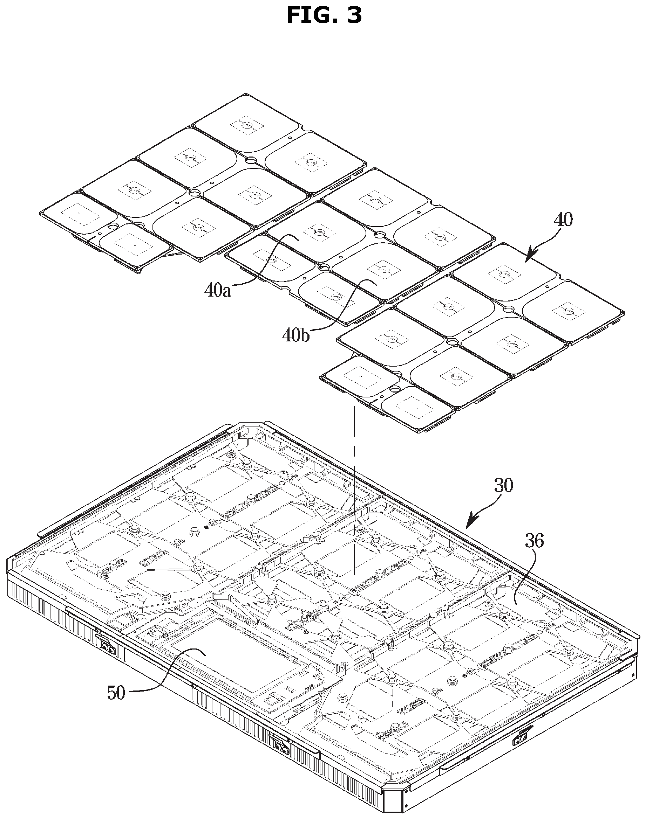

FIG. 3 is a drawing illustrating a state in which a coil assembly of a cooking appliance according to one embodiment is separated.

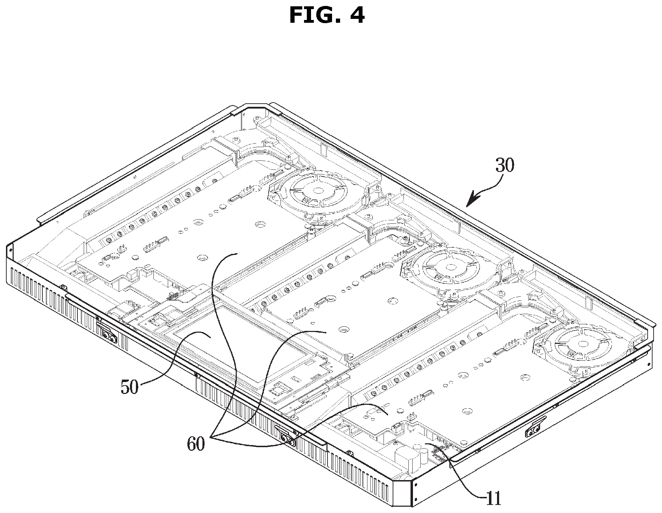

FIG. 4 is a drawing illustrating a state in which a coil assembly mounting plate that mounts a coil assembly of a cooking appliance according to one embodiment is separated.

Referring to FIGS. 3 and 4, the cooking appliance 1 may include a coil assembly mounting plate 36. The coil assembly mounting plate 36 may be provided inside the bottom plate 30 such that the coil assembly mounting plate 36 is provided below the coil assembly 40 to mount the coil assembly 40 thereon. The coil assembly mounting plate 36 may be provided on the upper side of the PBA 60.

The cooking appliance 1 may include the PBA 60. The PBA 60 may be provided to implement circuits for various operations of the cooking appliance 1. For example, the PBA 60 may include a controller (200, see FIG. 6), an A/D converter (120, see FIG. 6), and a multiplexer (130, see FIG. 6) to be described below.

The cooking appliance 1 may include a plurality of electronic and installed parts 11. The plurality of electrical components 11 may be provided below the PBA 60. The plurality of electronic and installed parts 11 may be provided to apply drive current to various components of the cooking appliance 1. For example, the plurality of electronic and installed parts 11 may include a power supply (300, see FIG. 6) to be described below.

Although the PBA 60 and the plurality of electronic and installed parts 11 described above have been illustrated as separate components, the PBA 60 and the plurality of electronic and installed parts 11 may be implemented as one circuit for various operations of the cooking appliance 1.

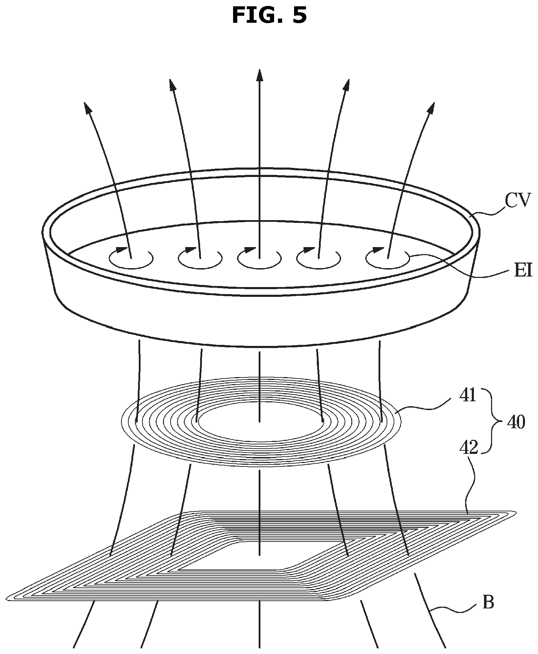

FIG. 5 is a drawing for describing the principle by which a magnetic field or an induced electromotive force generated when driving a heating coil affects a vessel detection coil.

Referring to FIG. 5, as described above, the coil assembly 40 may include the first coil assembly 40a and the second coil assembly 40b, and each of the first coil assembly 40a and the second coil assembly 40b may include at least one vessel detection coil 41 and/or at least one heating coil 42.

As illustrated in FIG. 5, the heating coil 42 may, upon a drive current being applied to the wound wire, generates a magnetic field B that passes through the inside of the heating coil 42 according to Ampere's law.

In this case, the magnetic field B generated in the heating coil 42 passes through the bottom of the cooking vessel CV. The drive current applied to the heating coil 42 is an alternating current of which the direction changes with time. Accordingly, the magnetic field B generated in the heating coil 42 also changes with time.

That is, when the time-varying magnetic field B passes through the inside of the heating coil 42, a current rotating around the magnetic field is generated inside the bottom of the cooking vessel CV.

Here, the current rotating around the magnetic field B is a current formed by a voltage that is generated in a direction to oppose the change in the magnetic field B of the heating coil 42, and is referred to as an eddy current EI.

As described above, the bottom of the cooking vessel CV is heated by the eddy current EI.

In other words, when an eddy current EI flows through the cooking vessel CV having electrical resistance, heat is generated according to Ohm's law, and the cooking vessel CV may be heated accordingly.

Here, the phenomenon in which a current is induced by a time-varying magnetic field B is referred to as an electromagnetic induction phenomenon. As described above, the cooking appliance 1 may heat the cooking vessel CV by applying a drive current to the heating coil 42 and using the magnetic field B generated by the heating coil 42.

The heating coil 42 shown in FIG. 5 is illustrated as a quadrangular shape, but it may be provided in various shapes. For example, the heating coil 42 may be provided in a circular shape.

The vessel detection coil 41 may be arranged below the cooking plate 20 to identify the position of the cooking vessel CV on the cooking plate 20 or to identify the type of the cooking vessel CV on the cooking plate 20.

The vessel detection coil 41 may, upon an input current being input thereto, output an output current. The cooking appliance 1 may detect the cooking vessel CV on the cooking plate 20 based on the output current output from the vessel detection coil 41.

The detection of the cooking vessel CV on the cooking plate 20 may include converting, by the A/D converter 120, a signal of the output current output from the vessel detection coil 41 into a digital signal, and identifying, by the controller (200, see FIG. 6), the position of the cooking vessel CV on the cooking plate 20 or identifying the type of the cooking vessel CV on the cooking plate 20 using the converted digital signal.

For example, the detection of the cooking vessel CV on the cooking plate 20 may include, converting, by the A/D converter 120, a signal of the output current output from the vessel detection coil 41 into a digital signal, obtaining, by the controller (200, see FIG. 6), information about the phase of the output current and information about the impedance of the vessel heating coil 41 using the converted digital signal, and based on the information about the phase of the output current and the information about the impedance of the vessel heating coil 41, identifying the position of the cooking vessel CV on the cooking plate 20 or the type of the cooking vessel CV on the cooking plate 20.

However, when a magnetic field B generated in the heating coil 42 or an induced electromotive force generated by an electromagnetic induction phenomenon is applied to the vessel detection coil 41, the detection of the cooking vessel CV on the cooking plate 20 through the vessel detection coil 41 may not be performed accurately.

Therefore, it is required to prevent the magnetic field B generated in the heating coil 42 or the induced electromotive force generated by the electromagnetic induction phenomenon from being applied to the vessel detection coil 41. According to the present disclosure, a method of preventing the magnetic field B generated in the heating coil 42 or the induced electromotive force generated by the electromagnetic induction phenomenon from being applied to the vessel detection coil 41 is described below.

FIG. 6 is a control block diagram illustrating a cooking appliance according to one embodiment.

Referring to FIG. 6, the cooking appliance 1 according to one embodiment may include a vessel detection circuit 100, a power supply 300, a user interface device 51, and/or a controller 200.

The vessel detection circuit 100 may include a vessel detection coil 41, a switching portion 110, an A/D converter 120, and/or a multiplexer 130.

The vessel detection coil 41 may, in response to a drive current being applied from the power supply 300 to the vessel detection circuit 100, have an input current input thereto.

The vessel detection coil 41 may include a plurality of vessel detection coils.

The switching portion 110 may allow or block an input current to flow or from flowing into the vessel detection coil 41 or allow or block an output current to flow or from flowing from the vessel detection coil 41.

The controller 200 may control the switching portion 110 such that the switching portion 110 allows or blocks an input current to flow or from flowing into the vessel detection coil 41.

The controller 200 may control the switching portion 110 such that the switching portion 110 allows or blocks an output current to flow or from flowing from the vessel detection coil 41.

The A/D converter 120 may convert the signal of the output current output from the vessel detection coil 41 into a digital signal. For example, an analog signal of an output current output from the vessel detection coil 41 may be converted into a digital signal to detect the cooking vessel CV on the cooking plate 20.

The A/D converter 120 may convert the signal of the output current output from the vessel detection coil 41 into the digital signal and then transmit the converted digital signal to the controller 200. The controller 200 may detect the cooking vessel CV on the cooking plate 20 using the digital signal received from the A/D converter 120.

The multiplexer 130 may allow input currents, which are input to the plurality of vessel detection coils, to be input into the plurality of vessel detection coils each corresponding to one of the plurality of input currents.

The multiplexer 130 may allow output currents, which are output from the plurality of vessel detection coils, to be output to the A/D converter 120.

The multiplexer 130 may include a plurality of multiplexers. For example, the multiplexer 130 may include a multiplexer for allowing input currents, which are input to the plurality of vessel detection coils, to be input to the plurality of vessel detection coils, each corresponding to one of the input currents, and a multiplexer for allowing output currents, which are output from the plurality of vessel detection coils, to be output to the A/D converter 120.

The power supply 300 may apply drive current to various components of the cooking appliance 1.

The power supply 300 may include an electromagnetic Interference (EMI) filter for converting AC current supplied from a commercial power source into DC current and removing noise of the AC current supplied from the commercial power source, a power factor circuit (PFC) for compensating for the power factor of the AC current, a converter for converting AC current supplied from a commercial power source into DC current through a switching operation, an output capacitor to which DC current is applied, and/or an inverter for converting DC current back into AC current through a switching operation.

The controller 200 may control the power supply 300 such that drive current is applied to various components of the cooking appliance 1. For example, the controller 200 may control the power supply 300 such that drive current is applied to the vessel detection circuit 100, the heating coil, and/or the user interface device 51.

The user interface device 51 may allow the user and the cooking appliance 1 to interact with each other.

The user interface device 51 may include an output interface 51b and an input interface 5l a.

The output interface 51b may generate sensory information to transmit various types of information related to the operation of the cooking appliance 1 to the user.

For example, the output interface 51b may transmit information related to the settings of the cooking appliance 1 and the operation of the cooking appliance 1 to the user. Information related to the operation of the cooking appliance 1 may be output through display, an indicator, and/or a speech. The output interface 51b may include, for example, a liquid crystal display (LCD) panel, an indicator, a light emitting diode (LED) panel, a speaker, etc.

In one embodiment, the output interface 51b may output sensory information (e.g., visual information, auditory information, etc.) related to the control of the cooking appliance 1.

The input interface 51a may convert sensory information received from a user into an electrical signal.

When the user interface device 51 includes a touch screen display, the touch screen display may correspond to an example of the output interface 51b and the input interface 51a.

The input interface 51a may include an input device (e.g., a button, a knob, etc.) that receives a user input for controlling the operation of the cooking appliance 1.

Each button may include a visual indicator (e.g., text, an icon, etc.) that may indicate the function thereof.

The input interface 51a may include, for example, a tact switch, a push switch, a slide switch, a toggle switch, a micro switch, a touch switch, a touch pad, a touch screen, a jog dial, and/or a microphone.

In the present disclosure, a "button" may be replaced with a user interface element (UI element), a tact switch, a push switch, a slide switch, a toggle switch, a micro switch, a touch switch, a touch pad, a touch screen, a jog dial, and/or a microphone.

The cooking appliance 1 may process a user input received through the user interface device 51 and output information related to the cooking appliance 1 through the user interface device 51.

The controller 200 may control the operation of the cooking appliance 1 based on the user input received through the user interface device 51.

The controller 200 may include a processor 210 that controls the operation of the cooking appliance 1 and memory 220 in which programs and data for controlling the operation of the cooking appliance 1 are stored.

The memory 220 may store data required for various embodiments. The memory 220 may be implemented in the form of memory embedded in the cooking appliance or in the form of memory that may be attached to or detached from the cooking appliance, depending on the use of data storage. For example, data for operating the cooking appliance may be stored in memory embedded in the cooking appliance, and data for expanding functions of the cooking appliance may be stored in memory attachable to or detachable from the cooking appliance. Meanwhile, the memory embedded in the cooking appliance may be implemented as at least one of: volatile memory (e.g., dynamic RAM (DRAM), static RAM SRAM), or synchronous dynamic RAM SDRAM)); and non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash), a hard drive, or a solid state drive SSD)). In addition, the case of memory that may be attached to or detached from the cooking appliance 1 may be implemented in the form of a memory card (e.g., compact flash (CF), secure digital SD), micro secure digital (Micro-SD), mini secure digital (Mini-SD), extreme digital (xD), multi-media card (MMC)), external memory that may be connected to a USB port (e.g., USB memory), and the like

The processor 210 controls the overall operation of the cooking appliance 1. Specifically, the processor 210 is connected to each component of the cooking appliance 1 (e.g., the vessel detection circuit 100, the power supply 300, and/or the user interface device 51) to control the overall operation of the cooking appliance 1. For example, the processor 210 may be electrically connected to the memory 220 to control the overall operation of the cooking appliance 1. The processor 210 may include a single processor or a plurality of processors 210.

The processor 210 may perform the operation of the cooking appliance according to various embodiments by executing at least one instruction stored in the memory 220.

The processor 210 may include one or more of a central processing unit (CPU), a graphics processing unit (GPU), an accelerated processing unit (APU), a many integrated core (MIC), a digital signal processor (DSP), a neural processing unit NPU), a hardware accelerator, or a machine learning accelerator. The processor 210 may control one or any combination of components of the cooking appliance 1, and may perform operations related to communication or data processing. The processor 210 may execute at least one program or instruction stored in the memory 220. For example, the processor 210 may perform a method according to at least one embodiment of the present disclosure by executing at least one instruction stored in the memory 220.

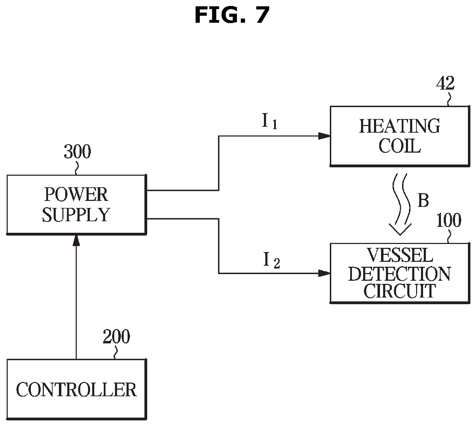

FIG. 7 is a drawing for describing a method of applying driving power to a heating coil and a vessel detection coil according to one embodiment.

Referring to FIG. 7, the controller 200 may control the power supply 300 such that a drive current is applied to the heating coil 42 and/or the vessel detection coil 41.

For example, the controller 200 may control the power supply 300 such that a first drive current I₁ for driving the heating coil 42 is applied to the heating coil 42.

For another example, the controller 200 may control the power supply 300 such that a second drive current I₂ for detecting the cooking vessel CV on the cooking plate 20 is applied to the vessel detection circuit 100.

The driving of the heating coil 42 may include applying, to the heating coil 42, the first drive current I₁ required to heat the cooking vessel CV on the cooking plate 20 through the heating coil 42.

The first drive current I_{I} applied to the heating coil 42 may have a current value greater than the second drive current I₂.

That is, in order to drive the heating coil 42, the first drive current I₁ greater than the second drive current I₂ needs to be applied to the heating coil 42.

Accordingly, when the cooking vessel CV on the cooking plate 20 is detected through the vessel detection circuit 100 while the heating coil 42 is being driven, the magnetic field B generated by the first drive current applied to the heating coil 42 and the induced electromotive force generated by the electromagnetic induction phenomenon may be induced in the vessel detection circuit 100, which may prevent accurate detection of the cooking vessel CV on the cooking plate 20.

In addition, an excessive induced electromotive force may be induced in each component of the vessel detection circuit 100, which may cause a failure of each component of the vessel detection circuit 100.

Therefore, when detecting a cooking vessel CV on a cooking plate 20 through the vessel detection circuit 100, it is required to prevent the magnetic field B generated from the heating coil 42 and the induced electromotive force generated by the electromagnetic induction phenomenon from being induced in the vessel detection circuit 100.

Hereinafter, according to the present disclosure, a method of preventing the magnetic field B generated from the heating coil 42 and the induced electromotive force from being induced in the vessel detection circuit 100 when detecting the cooking vessel CV on the cooking plate 20 through the vessel detection circuit 100 will be described.

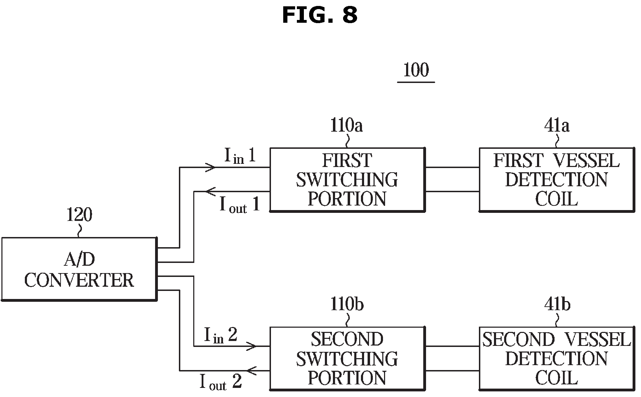

FIG. 8 is a drawing for describing a method of applying an input current to a vessel detection coil and obtaining an output current output from the vessel detection coil according to one embodiment.

Referring to FIG. 8, the vessel detection circuit 100 may include an A/D converter 120, a plurality of switching portions 110a and 110b, and/or a plurality of vessel detection coils 41a and 41b.

The plurality of switching portions 110a and 110b may include a first switching portion 110a and a second switching portion 110b. The plurality of vessel detection coils 41a and 41b may include a first vessel detection coil 41a and a second vessel detection coil 41b.

The number of switching portions and the number of vessel detection coils according to the present disclosure are not limited to those shown in FIG. 8, and may each be three or more according to various embodiments. However, for convenience of description, the number of switching portions and the number of vessel detection coils are described as being two.

A first input current Iᵢₙ1 may be input to the first vessel detection coil 41a. A first output currentIₒᵤₜ1 may be output from the first vessel detection coil 41a.

For example, the controller 200 may control the power supply 300 such that a second drive current I₂ is applied to the vessel detection circuit 100. Accordingly, the first input current Iᵢₙ1 may be input to the first vessel detection coil 41a.

A second input current Iᵢₙ2 may be input to the second vessel detection coil 41b. A second output current Iₒᵤₜ2 may be output from the second vessel detection coil 41b.

For example, the controller 200 may control the power supply 300 such that the second drive current I₂ is applied to the vessel detection circuit 100. Accordingly, the second input current Iᵢₙ2 may be input to the second vessel detection coil 41b.

The first switching portion 110a may allow or block the first input current Iᵢₙ1 to flow or from flowing into the first vessel detection coil 41a, or may allow or block the first output current Iₒᵤₜ1 to flow or from flowing from the first vessel detection coil 41a.

The second switching portion 110b may allow or block the second input current Iᵢₙ2 to flow or from flowing into the second vessel detection coil 41b or may allow or block the second output current Iₒᵤₜ2 to flow or from flowing from the second vessel detection coil 41b.

The A/D converter 120 may convert the signal of the output current into a digital signal.

For example, the A/D converter 120 may convert the analog signal of the first output current Iₒᵤₜ1 output from the first vessel detection coil 41a into a digital signal.

For another example, the A/D converter 120 may convert the analog signal of the second output current Iₒᵤₜ2 output from the second vessel detection coil 41b into a digital signal.

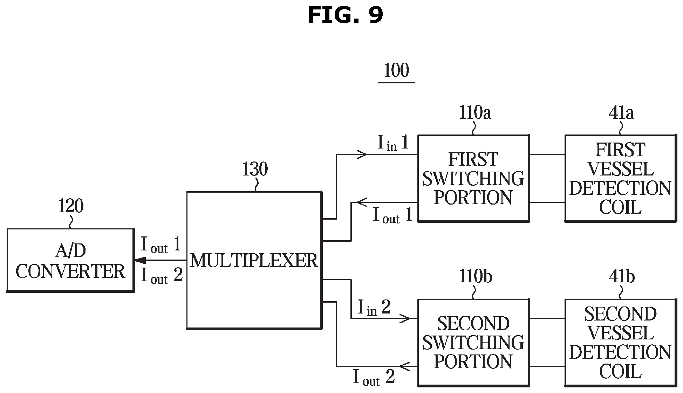

FIG. 9 is a diagram for describing a method of sequentially applying input currents to vessel detection coils using a multiplexer, or sequentially obtaining output currents from the vessel detection coils using a multiplexer according to one embodiment.

Referring to FIG. 9, the vessel detection circuit 100 may further include a multiplexer 130. The multiplexer 130 may be connected between the A/D converter 120 and the plurality of switching portions 110a and 110b.

The multiplexer 130 may allow input currents, which are input to the plurality of vessel detection coils 41a and 41b, to be sequentially input to the plurality of vessel detection coils 41a and 41b each corresponding to one of the input currents.

For example, the multiplexer 130 may allow the first input current Iᵢₙ1 to be input into the first vessel detection coil 41a and then allow the second input current Iᵢₙ2 to be input into the second vessel detection coil 41b.

For another example, the multiplexer 130 may allow the second input current Iᵢₙ2 to be input into the second vessel detection coil 41b and then allow the first input current Iᵢₙ1 to be input into the first vessel detection coil 41a.

The controller 200 may control the multiplexer 130 such that input currents, which are input to the plurality of vessel detection coils 41a and 41b, are sequentially input to the plurality of vessel detection coils 41a and 41b each corresponding to one of the input currents.

The multiplexer 130 may allow output currents, which are output from the plurality of vessel detection coils 41a and 41b, to be sequentially output to the A/D converter 120.

For example, the multiplexer 130 may allow the first output current Iₒᵤₜ1, which is output from the first vessel detection coil 41a, to be output to the A/D converter 120 and then allow the second output current Iₒᵤₜ2, which is output from the second vessel detection coil 41b, to be output to the A/D converter 120.

For another example, the multiplexer 130 may allow the second output current Iₒᵤₜ2, which is output from the second vessel detection coil 41a, to be output to the A/D converter 120 and then allow the first output current Iₒᵤₜ1, which is output from the first vessel detection coil 41a, to be output to the A/D converter 120.

The controller 200 may control the multiplexer 130 such that output currents, which are output from the plurality of vessel detection coils 41a and 41b, to be sequentially output to the A/D converter 120.

According to the present disclosure, the electrical connection between the A/D converter 120 and the plurality of vessel detection coils 41a and 41b may be blocked from flowing or allowed to flow through the switching portion, thereby preventing the magnetic field B generated by the heating coil 42 or the induced electromotive force generated by the electromagnetic induction phenomenon from being induced into the vessel detection circuit 100.

According to the present disclosure, the input currents Iᵢₙ1 and Iᵢₙ2, which are input to the plurality of vessel detection coils 41a and 41b, are allowed to be sequentially input to the plurality of vessel detection coils 41a and 41b, respectively, and the output currents Iₒᵤₜ1 and Iₒᵤₜ2, which are output from the plurality of vessel detection coils 41a and 41b, are allowed to be sequentially output to the A/D converter 120 such that even with an increased number of vessel detection coils 41, the structure of the vessel detection circuit 100 may be simplified.

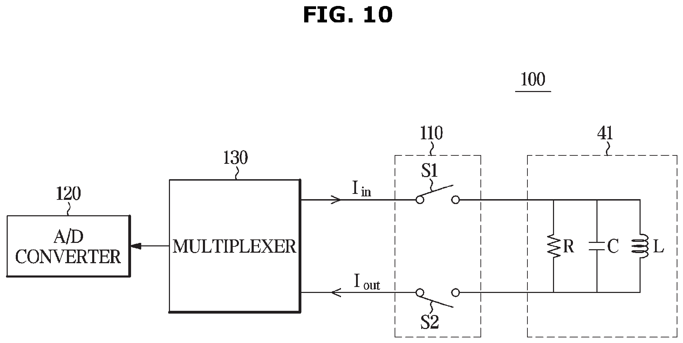

FIG. 10 is a circuit diagram of a vessel detection circuit according to one embodiment.

In FIGS. 10 to 13, the switching portion 110 is described as one of the plurality of switching portions 110a and 110b, and the vessel detection coil 41 is described as one of the plurality of vessel detection coils 41a and 41b.

Referring to FIG. 10, the switching portion 110 may include at least one switch that allows or blocks an input current Iᵢₙ to flow or from flowing into the vessel detection coil 41 or allow or blocks an output current Iₒᵤₜ to flow or from flowing from the vessel detection coil 41.

The at least one switch may include a first switch S1 and a second switch S2.

Each of the first switch S1 and the second switch S2 may be a field effect transistor (FET). However, it is not limited thereto, and the first switch S1 and the second switch S2 may be implemented as a bipolar junction transistor (BJT) instead of a FET. The implementation of the first switch S1 and the second switch S2 may be changed according to the designer's intention, and the contents of the present invention may also be implemented using a BJT.

The vessel detection coil 41 may be composed of an inductor L, a capacitor C, and a resistor R.

When the first switch S1 and the second switch S2 are turned on, the input current Iᵢₙ is input to the vessel detection coil 41, and the output current Iₒᵤₜ output from the vessel detection coil 41 is output to the A/D converter 120 through the multiplexer 130, and the A/D converter 120 may convert the signal of the output current Iₒᵤₜ into a digital signal. Accordingly, the controller 200 may detect the cooking vessel CV on the cooking plate 20 using the digital signal.

When at least one of the first switch S1 or the second switch S2 is turned off, the flow of the input current Iᵢₙ into the vessel detection coil 41 is blocked, and the flow of the output current Iₒᵤₜ from the vessel detection coil 41 may also be blocked.

In one embodiment, the controller 200 may keep at least one switch turned on while the heating coil 42 is not driven.

For example, the controller 200 may keep the first switch S1 and the second switch S2 turned on while the first drive current (I₁, FIG. 7) is not applied to the heating coil 42 through the power supply 300. Accordingly, the first switch S1 and the second switch S2 are kept turned on while the heating coil 42 is not driven, and thus the controller 200 may detect the cooking vessel CV on the cooking plate 20.

In one embodiment, the controller 200 may turn on at least one switch for a specified time at each predetermined period while the heating coil is being driven 42.

For example, the controller 200 may turn on the first switch S1 and the second switch S2 for a specified time at each predetermined period while the first drive current (I₁, FIG. 7) is being applied to the heating coil 42 through the power supply 300.

Even when the heating coil 42 is being driven, it is required to detect the cooking vessel CV on the cooking plate 20. For example, when the position of the cooking vessel CV on the cooking plate 20 changes or the type of the cooking vessel CV changes while the heating coil 42 is being driven to perform cooking, it is required to detect the cooking vessel CV on the cooking plate 20.

However, while the heating coil 42 is being driven, a magnetic field B generated from the heating coil 42 or an induced electromotive force generated by an electromagnetic induction phenomenon may be induced in the vessel detection circuit 100, which may cause a failure of each component (e.g., the A/D converter 120, the multiplexer 130, and the vessel detection coil 41) of the vessel detection circuit 100. Therefore, the cooking appliance 1 may detect the cooking vessel CV on the cooking plate 20 by turning on the first switch S1 and the second switch S2 only for a specified time at each predetermined period while driving the heating coil 42.

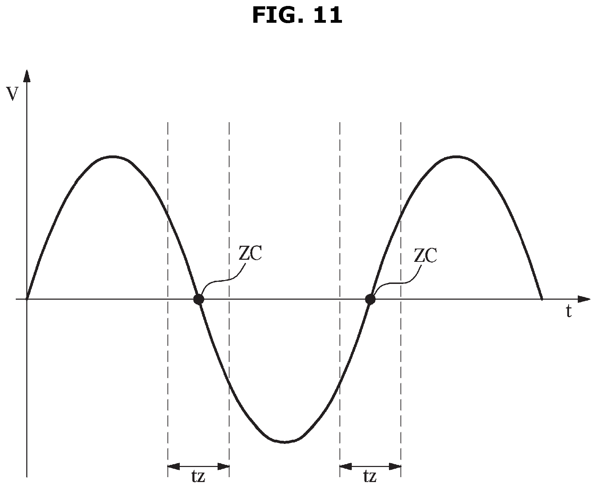

FIG. 11 is a diagram for describing a method of determining the period for turning on a switch of a vessel detection circuit based on a driving frequency applied to a heating coil according to one embodiment.

In FIG. 11, the waveform of the driving power applied to the heating coil 42 is illustrated.

The driving power applied to the heating coil 42 may have a waveform of AC power.

The driving power applied to the heating coil 42, which is AC power that changes over time, may have a value of 0 as time progresses. The time when the driving power applied to the heating coil 42 has a value of 0 may be referred to as a zero-crossing time ZC.

At the zero-crossing time ZC, the value of the driving power applied to the heating coil 42 is 0, and thus the intensity of the magnetic field B generated from the heating coil 42 or the induced electromotive force due to the electromagnetic induction phenomenon may be lower than that at other times.

In one embodiment, the controller 200 may determine the predetermined period based on the driving frequency of the heating coil 42.

For example, the controller 200 may use the zero-crossing time ZC of the driving power applied to the heating coil 42 to determine the predetermined period.

Specifically, when the driving frequency of the driving power applied to the heating coil 42 is high, the interval between the zero-crossing times ZC of the driving power decreases, and when the driving frequency of the driving power applied to the heating coil 42 is low, the interval between the zero-crossing times (ZC) of the driving power increases. Accordingly, the controller 200 may determine the predetermined period to be inversely proportional to the driving frequency of the driving power applied to the heating coil 42.

In one embodiment, the controller 200 may turn on at least one switch (e.g., S1 and S2) for a specified time tz at each predetermined period based on the driving frequency of the heating coil 42.

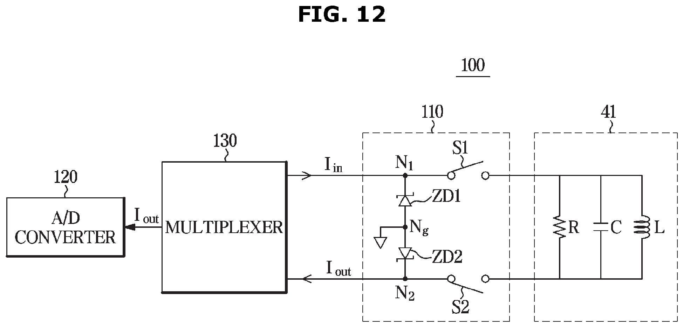

FIG. 12 illustrates a circuit diagram of a vessel detection circuit with a Zener diode further added to the vessel detection circuit shown in FIG. 10.

The switching portion 110 may further include a Zener diode circuit connecting a first node N1 through which an input current Iᵢₙ flows and a second node N2 through which an output current Iₒᵤₜ flows.

The Zener diode circuit may include a first Zener diode ZD1 having a cathode connected to the first node N1 and an anode connected to the ground node Ng and/or a second Zener diode ZD2 having a cathode connected to the second node N2 and an anode connected to the ground node Ng.

The Zener diode circuit may be configured such that even when a magnetic field B generated by driving the heating coil 42 and an induced electromotive force generated by an electromagnetic induction phenomenon are induced to the vessel detection coil 41, a voltage value greater than a preset voltage value is not applied to the A/D converter 120 and the multiplexer 130.

For example, since the first Zener diode ZD1 has the cathode connected to the first node N1 and the anode connected to the ground node Ng, even when a voltage value greater than a preset voltage value is applied to the first node N1, current flows through the first Zener diode ZD1 to the ground node Ng, thereby preventing the voltage greater than the preset voltage value from being applied to the A/D converter 120 and the multiplexer 130.

For another example, since the second Zener diode ZD2 has the cathode connected to the second node N2 and the anode connected to the ground node Ng, even when a voltage value greater than a preset voltage value is applied to the second node N2, current flows through the second Zener diode ZD2 to the ground node Ng, thereby preventing the voltage greater than the preset voltage value from being applied to the A/D converter 120 and the multiplexer 130.

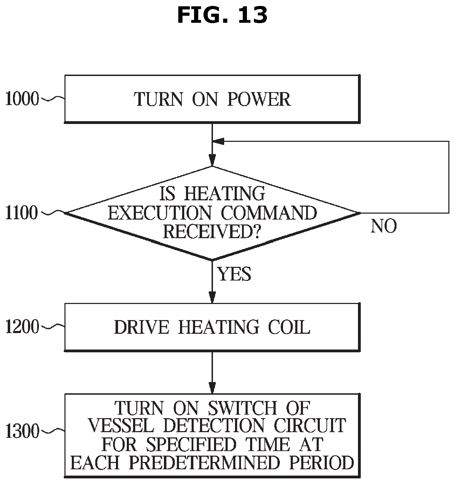

FIG. 13 is a flowchart for describing a method of controlling a cooking appliance according to one embodiment.

Referring to FIG. 13, in one embodiment, the controller 200 may turn on at least one switch (e.g., S1, S2) for a specified time at a predetermined period based on receiving a heating execution command for heating the cooking vessel CV on the cooking plate 20.

For example, the controller 200 may, based on a heating execution command being received through the user interface device 51 (YES in operation 1100) subsequent to the cooking appliance 1 being powered on 1000, drive the heating coil 42 (1200), and turn on at least one switch (e.g., S1, S2 for a specified time at each predetermined period (1300).

In one embodiment, the controller 200 may, upon powering on the cooking appliance 1, keep at least one switch (e.g., S1, S2) turned on until receiving a heating execution command. For example, the controller 200 may, upon powering on the cooking appliance 1, keep the first switch S1 and the second switch S2 turned on in the absence of a heating execution command being received (NO in operation 1100).

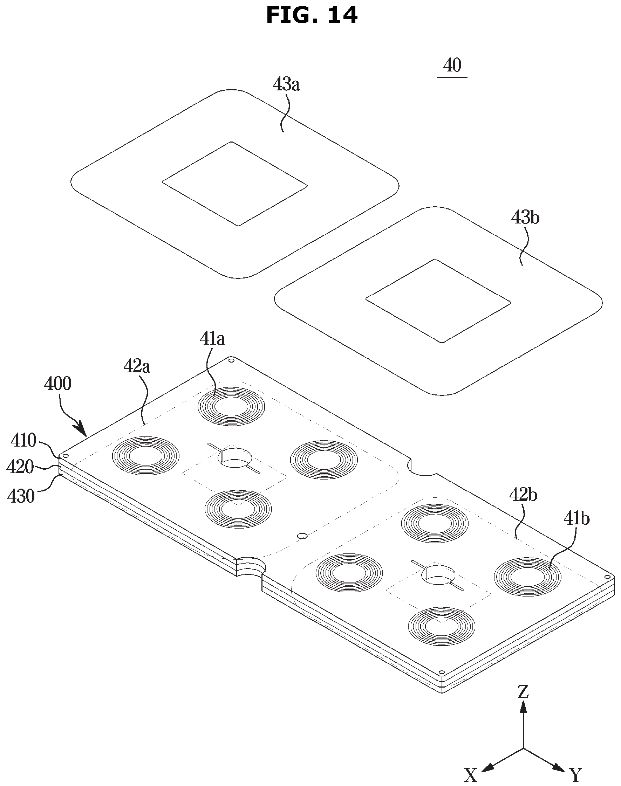

FIG. 14 is a drawing illustrating a portion of a coil assembly according to one embodiment.

Referring to FIG. 14, the coil assembly 40 is disposed below the cooking plate 20 and may include a first layer 410, an insulating layer 420 disposed below the first layer 410, a second layer 430 disposed below the insulating layer 420, and/or coil covers 43a and 43b disposed on the first layer 410.

The coil covers 43a and 43b may include a first coil cover 43a and a second coil cover 43b.

The vessel detection coils 41a and 41b may be arranged in the first layer 410. The vessel detection coils 41a and 41b may include a first vessel detection coil 41a and a second vessel detection coil 41b.

The heating coils 42a and 42b may be arranged in the second layer 430. The heating coils 42a and 42b may include a first heating coil 42a and a second heating coil 42b.

Referring to FIG. 3 and FIG. 14, the first coil assembly 40a includes: a first coil cover 43a disposed below the first cooking area CA1; and a first layer 410, an insulating layer 420, and a second layer 430 arranged in a region corresponding to an area below the first cooking area CA1. The first vessel detection coil 41a may be disposed in the first layer 410 arranged in the region corresponding to the area below the first cooking area CA1, and the first heating coil 42a may be disposed in the second layer 430 arranged in the region corresponding to the area below the first cooking area CA1.

The second coil assembly 40b includes: a second coil cover 43b disposed below the second cooking area CA2; and a first layer 410, an insulating layer 420, and a second layer 430 arranged in a region corresponding to an area below the second cooking area CA2. The second vessel detection coil 41b may be disposed in the first layer 410 arranged in the region corresponding to the area below the second cooking area CA2, and the second heating coil 42b may be disposed in the second layer 430 arranged in the region corresponding to the area below the second cooking area CA2.

The heating coils 42a and 42b and the vessel detection coils 41a and 41b may be arranged in a perpendicular direction (Z direction) relative to each other. For example, the first layer 410 and the second layer 430 may be stacked along the vertical direction (Z direction). The vessel detection coils 41a and 41b may be arranged in the first layer 410, and the heating coils 42a and 42b may be arranged in the second layer 430 such that the vessel detection coils 41a and 41b may be arranged in a perpendicular direction (Z direction) relative to the heating coils 42a and 42b.

Conventionally, the vessel detection coils 41a and 41b are arranged in a parallel direction (Y direction) relative to the heating coils 42a and 42b. For example, the heating coils 42a and 42b and the vessel detection coils 41a and 41b are arranged in the same layer. Specifically, the vessel detection coil 41a and 41b are arranged in the central portion relative to the heating coils 42a and 42b.

When the vessel detection coils 41a and 41b are arranged in the same layer as the heating coils 42a and 42b, the area in which the vessel detection coils 41a and 41b may be arranged may be limited by the area occupied by the heating coils 42a and 42b.

According to the present disclosure, the vessel detection coils 41a and 41b are arranged in a layer different from a layer in which the heating coils 42a and 42b are arranged (e.g., the first layer 410 and the second layer 430), which increases the area available for the arrangement of the vessel detection coils 41a and 41b compared to when the vessel detection coils 41a and 41b and the heating coils 42a and 42b are arranged in the same layer. As a result, the area on the cooking plate in which the cooking vessel is detachable is expanded, and thus the cooking vessel V can be detected from any region of the cooking plate 20. The heating coils 42a and 42b may be formed in a quadrangular shape.

Conventionally, the heating coils 42a and 42b are formed in a circular shape. When the heating coils 42a and 42b are formed in a circular shape, the area on the cooking plate 20 available for heating the cooking vessel CV may be reduced compared to when the heating coils 42a and 42b are formed in a quadrangular shape.

According to the present disclosure, the heating coils 42a and 42b are formed in a quadrangular shape, which expands the area on the cooking plate 20 available for heating the cooking vessel CV. Accordingly, the cooking vessel CV may be heated even when the cooking vessel CV is not arranged in a region corresponding to the center of the cooking area (CA) of the cooking plate 20, and thus the cooking vessel CV can be heated without limitation on the size or number of the cooking vessel CV.

In addition, according to the present disclosure, the vessel detection coils 41a and 41b are disposed in a layer different from a layer in which the heating coils 42a and 42b are disposed (e.g., the first layer 410 and the second layer 430), and an insulating layer 420 is formed between the vessel detection coils 41a and 41b and the heating coils 42a and 42b, and thus the induced electromotive force generated by the electromagnetic induction phenomenon induced in the vessel detection coils 41a and 41b can be minimized.

However, the structure of the coil assembly according to the present disclosure is not limited to that shown in FIG. 14, and the vessel detection coil and the heating coil may be disposed in the same layer according to various embodiments.

A cooking apparatus according to an embodiment of the present disclosure may include: a cooking plate; a heating coil disposed below the cooking plate; a vessel detection circuit including a vessel detection coil corresponding to the heating coil and at least one switch configured to allow or block a flow of an input current into the vessel detection coil or a flow of an output current from the vessel detection coil; and a controller configured to turn on the at least one switch for a specified time at each predetermined period while the heating coil is being driven.

The vessel detection circuit may further include an analogue/digital (A/D) converter configured to convert a signal of the output current into a digital signal.

The vessel detection coil may include a plurality of vessel detection coils, and the vessel detection circuit may further include a multiplexer configured to allow input currents, which are input into the plurality of vessel detection coils, to be sequentially input into the plurality of vessel detection coils, each corresponding one of the input currents.

The plurality of vessel detection coils may include a first vessel detection coil and a second vessel detection coil, and the multiplexer may be configured to allow a first input current, which is input into the first vessel detection coil, to be input into the first vessel detection coil and then allow a second input current, which is input into the second vessel detection coil, to be input into the second vessel detection coil.

The vessel detection coil may include a plurality of vessel detection coils, and the vessel detection circuit may include a multiplexer configured to allow output currents, which are output from the plurality of vessel detection coils, to be sequentially output to the A/D converter.

The plurality of vessel detection coils may include a first vessel detection coil and a second vessel detection coil, and the multiplexer may be configured to allow a first output current, which is output from the first vessel detection coil, to be output to the A/D converter, and then allow a second output current, which is output from the second vessel detection coil, to be output to the A/D converter.

The vessel detection circuit may further include a Zener diode circuit configured to connect a first node through which the input current flows and a second node through which the output current flows, and the Zener diode circuit may include a first Zener diode having a cathode connected to the first node and an anode connected to a ground node, and a second Zener diode having a cathode connected to the second node and an anode connected to the ground node.

The controller may be configured to determine the predetermined period based on a driving frequency of the heating coil.

The controller may be configured to turn on the at least one switch for the specified time at each predetermined period based on receiving a heating execution command for heating a cooking vessel on the cooking plate.

The cooking apparatus may further include: a coil assembly configured to be disposed below the cooking plate and including a first layer, an insulating layer disposed below the first layer, and a second layer disposed below the insulating layer, wherein the vessel detection coil may be disposed in the first layer, and the heating coil is disposed in the second layer.

A method of controlling a cooking apparatus according to an embodiment of the present disclosure, which includes a cooking plate, a heating coil disposed below the cooking plate, and a vessel detection circuit disposed below the cooking plate, in which the vessel detection circuit includes a vessel detection coil corresponding to the heating coil, and at least one switch configured to allow or block a flow of an input current into the vessel detection coil or a flow of an output current from the vessel detection coil includes turning on the at least one switch for a specified time at each predetermined period while the heating coil is being driven.

The vessel detection circuit may further include an analogue/digital (A/D) converter configured to convert a signal of the output current into a digital signal.

The vessel detection coil may include a plurality of vessel detection coils, and the vessel detection circuit may further include a multiplexer configured to allow input currents, which are input into the plurality of vessel detection coils, to be sequentially input into the plurality of vessel detection coils, each corresponding one of the input currents.

The plurality of vessel detection coils may include a first vessel detection coil and a second vessel detection coil, and the multiplexer may be configured to allow a first input current, which is input into the first vessel detection coil, to be input into the first vessel detection coil and then allow a second input current, which is input into the second vessel detection coil, to be input into the second vessel detection coil.

The vessel detection coil may include a plurality of vessel detection coils, and the vessel detection circuit may include a multiplexer configured to allow output currents, which are output from the plurality of vessel detection coils, to be sequentially output to the A/D converter.

The plurality of vessel detection coils may include a first vessel detection coil and a second vessel detection coil, and the multiplexer may allow a first output current, which is output from the first vessel detection coil, to be output to the A/D converter and then allow a second output current, which is output from the second vessel detection coil, to be output to the A/D converter.

The vessel detection circuit may further include a Zener diode circuit configured to connect a first node through which the input current flows and a second node through which the output current flows, and the Zener diode circuit may include a first Zener diode having a cathode connected to the first node and an anode connected to a ground node, and a second Zener diode having a cathode connected to the second node and an anode connected to the ground node.

The method may further include determining the predetermined period based on a driving frequency of the heating coil.

The turning on the at least one switch for a specified time at each predetermined period may include turning on the at least one switch for the specified time at each predetermined period based on receiving a heating execution command for heating a cooking vessel on the cooking plate.

The cooking apparatus may further include: a coil assembly configured to be disposed below the cooking plate and including a first layer, an insulating layer disposed below the first layer, and a second layer disposed below the insulating layer, wherein the vessel detection coil may be disposed in the first layer, and the heating coil is disposed in the second layer.

The disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that may be interpreted by a computer. For example, the computer-readable recording medium may be read only memory (ROM), random access memory (RAM), a magnetic tape, a magnetic disc, a flash memory, an optical data storage device, etc.

The computer-readable recording medium may be provided in the form of a non-transitory storage medium, wherein the 'non-transitory storage medium' is a storage medium that is tangible device, and may not include a signal (e.g., an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment, the method according to the various embodiments disclosed herein may be provided in a computer program product. The computer program product may be traded between a seller and a buyer as a product. The computer program product may be distributed in the form of a machine-readable storage medium (e.g., compact disc read only memory (CD-ROM)), or may be distributed (e.g., download or upload) through an application store (e.g., Play StoreTM) online or directly between two user devices (e.g., smartphones). In the case of online distribution, at least a portion of the computer program product (e.g., downloadable app) may be stored at least semi-permanently or may be temporarily generated in a storage medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects. It will also be understood that any of the embodiment(s) described herein may be used in conjunction with any other embodiment(s) described herein.

## Claims

1. A cooking apparatus comprising:
a cooking plate;
a vessel detection circuit including:
a vessel detection coil, and
at least one switch that is controllable to allow a flow of an input current into the vessel detection coil and a flow of an output current from the vessel detection coil, wherein the vessel detection circuit is configured to, while the at least one switch is controlled to allow the flow of the input current into the vessel detection coil and the flow of the output current from the vessel detection coil, detect a position or a type of a cooking vessel on the cooking plate;
a heating coil below the cooking plate and configured to generate a magnetic field that extends through the cooking plate and the vessel detection circuit based on a driving power having a driving frequency being applied to the heating coil; and
a controller configured to control the at least one switch so that, for a specified time at each predetermined period of a plurality of predetermined periods corresponding to the driving frequency, while the driving power is being applied to the heating coil, the flow of the input current into the vessel detection coil and the flow of the output current from the vessel detection coil are allowed.

2. The cooking apparatus of claim 1, wherein the vessel detection circuit further includes an analog/digital (A/D) converter configured to convert a value of the output current from the vessel detection coil into a digital signal.

3. The cooking apparatus of claim 1, wherein
the vessel detection coil includes a plurality of vessel detection coils, and
the vessel detection circuit further includes a multiplexer that is controllable to allow a flow of each input current of a plurality of input currents respectively corresponding to the plurality of vessel detection coils to be sequentially input into each vessel detection coil of the plurality of vessel detection coils.

4. The cooking apparatus of claim 3, wherein
the plurality of vessel detection coils include a first vessel detection coil and a second vessel detection coil, and
the multiplexer is controllable to allow a flow of a first input current corresponding to the first vessel detection coil to be input into the first vessel detection coil and then to allow a flow of a second input current corresponding to the second vessel detection coil to be input into the second vessel detection coil.

5. The cooking apparatus of claim 2, wherein
the vessel detection coil includes a plurality of vessel detection coils, and
the vessel detection circuit further includes a multiplexer that is controllable to allow a flow of each output current of a plurality of output currents respectively corresponding to the plurality of vessel detection coils to be sequentially output to the A/D converter.

6. The cooking apparatus of claim 5, wherein the plurality of vessel detection coils include a first vessel detection coil and a second vessel detection coil, and
the multiplexer is controllable to allow a flow of a first output current corresponding to the first vessel detection coil to be output to the A/D converter, and then to allow a flow of a second output current corresponding to the second vessel detection coil to be output to the A/D converter.

7. The cooking apparatus of claim 1, wherein
the vessel detection circuit further includes a Zener diode circuit configured to connect a first node through which the flow of the input current flows and a second node through which the flow of the output current flows, and
the Zener diode circuit includes a first Zener diode having a first cathode connected to the first node and a first anode connected to a ground node, and a second Zener diode having a second cathode connected to the second node and a second anode connected to the ground node.

8. The cooking apparatus of claim 1, wherein the controller is configured to determine each predetermined period of the plurality of predetermined periods based on the driving frequency.

9. The cooking apparatus of claim 1, wherein the controller is configured to control the at least one switch based on receiving a heating execution command for heating the cooking vessel on the cooking plate.

10. The cooking apparatus of claim 1, further comprising:
a coil assembly below the cooking plate and including a first layer, an insulating layer below the first layer, and a second layer below the insulating layer,
wherein the vessel detection coil is in the first layer, and the heating coil is in the second layer.

11. A method of controlling a cooking apparatus including a cooking plate, a vessel detection circuit including a vessel detection coil, and at least one switch that is controllable to allow a flow of an input current into the vessel detection coil and a flow of an output current from the vessel detection coil, wherein the vessel detection circuit is configured to, while the at least one switch is controlled to allow the flow of the input current into the vessel detection coil and the flow of the output current from the vessel detection coil, detect a position or a type of a cooking vessel on the cooking plate, and the cooking apparatus further includes a heating coil below the cooking plate and configured to generate a magnetic field that extends through the cooking plate and the vessel detection circuit based on a driving power having a driving frequency being applied to the heating coil, the method comprising:
applying the driving power to the heating coil; and
controlling the at least one switch so that, for a specified time at each predetermined period of a plurality of predetermined periods corresponding to the driving frequency, while the driving power is being applied to the heating coil, the flow of the input current into the vessel detection coil and the flow of the output current from the vessel detection coil are allowed.

12. The method of claim 11, wherein the vessel detection circuit further includes an analog/digital (A/D) converter, the method further including:
converting, with the A/D converter, a value of the output current from the vessel detection coil into a digital signal.

13. The method of claim 11, wherein the vessel detection coil includes a plurality of vessel detection coils, and the vessel detection circuit further includes a multiplexer, the method further including:
controlling the multiplexer to allow a flow of each input current of a plurality of input currents respectively corresponding to the plurality of vessel detection coils to be sequentially input into each vessel detection coil of the plurality of vessel detection coils.

14. The method of claim 13, wherein the plurality of vessel detection coils include a first vessel detection coil and a second vessel detection coil, the method further including:
controlling the multiplexer to allow a flow of a first input current corresponding to the first vessel detection coil to be input into the first vessel detection coil and then to allow a flow of a second input current corresponding to the second vessel detection coil to be input into the second vessel detection coil.

15. The method of claim 12, wherein the vessel detection coil includes a plurality of vessel detection coils, and the vessel detection circuit further includes a multiplexer, the method further including:
controlling the multiplexer to allow a flow of each output current of a plurality of output currents respectively corresponding to the plurality of vessel detection coils to be sequentially output to the A/D converter.
